# EUROPÄISCHE PATENTANMELDUNG

(11) **EP 1 911 565 A2**
(43) Veröffentlichungstag der Anmeldung: **16.04.2008**
(21) Anmeldenummer: 07018037.7
(22) Anmeldetag: 14.09.2007
(51) Int. Cl.: B29C 47/06, B29C 47/12, B29C 47/90

(54) **Vorrichtung zur Herstellung von Verbund-Rohren**

(30) Priorität: 13.10.2006 DE 102006048512
(71) Anmelder: Hegler, Ralph-Peter, Dr.-Ing., 97688 Bad Kissingen (DE)
(72) Erfinder: Hegler, Ralph-Peter, Dr.-Ing., 97688 Bad Kissingen (DE)
(74) Vertreter: Rau, Manfred

(57) **Zusammenfassung**

Eine Vorrichtung zur Herstellung von Verbundrohren mit ovalem Querschnitt weist sich auf einer Formstrecke (5) paarweise zu einer Form ergänzende und in einer Produktionsrichtung (6) bewegte Halbkokillen (2, 2') auf. Der Formstrecke (5) ist ein Spritzkopf (10) mindestens eines Extruders vorgeordnet. Eine Außendüse (20) zur Erzeugung eines Außenschlauches (11) weist im Wesentlichen Kreisform auf und befindet sich in einem Abstand vor der Formstrecke. Eine Innendüse mit einem dem ovalen Querschnitt des zu erzeugenden Rohres ähnlichen Querschnitt befindet sich innerhalb der Formstrecke (5). Der aus der Außendüse (20) extrudierte Außenschlauch (11) wird beim Eintritt in die Formstrecke in einer Richtung aufgeweitet und in einer hierzu senkrechten Richtung zusammengedrückt.

## Beschreibung

Die Erfindung betrifft eine Vorrichtung zur Herstellung von Verbund-Rohren nach dem Oberbegriff des Anspruches 1.

Eine derartige Vorrichtung ist beispielsweise aus der EP 0 563 575 A2 (entsprechend US-PS 5,320,797) bekannt. Mit dieser bekannten Vorrichtung werden Verbund-Rohre mit Kreisquerschnitt hergestellt, die aus einem glattzylindrischen Innenrohr und einem gewellten Außenrohr bestehen, wobei die Herstellung durch Koextrusion erfolgt. Die Herstellung von derartigen Verbund-Rohren mit ovalem Querschnitt aus thermoplastischem Kunststoff ist hiermit nicht ohne weiteres möglich. Derartige, beispielsweise aus der DE 20 2005 005 056 U bekannte ovale Verbund-Rohre werden beispielsweise zum Transportieren von Luft und vergleichbaren Medien eingesetzt. Ihre Anwendung erfolgt insbesondere in Heizungs-, Lüftungs- und Klima-Anlagen bzw. als Elektroinstallationsrohre. Die gattungsgemäße Vorrichtung ist zwar für die Herstellung solcher ovalen Verbund-Rohre nicht ohne weiteres einsetzbar; die auf solchen Vorrichtungen hergestellten Verbund-Rohre weisen aber den großen Vorteil hoher Formsteifigkeit, insbesondere hoher Ringsteifigkeit, und eines geringen Strömungswiderstandes auf.

Der Erfindung liegt daher die Aufgabe zugrunde, eine Vorrichtung der gattungsgemäßen Art so auszugestalten, dass auf ihr Verbund-Rohre mit ovalem Querschnitt hergestellt werden können.

Diese Aufgabe wird erfindungsgemäß durch die Merkmale im Kennzeichnungsteil des Anspruches 1 gelöst. Durch die Ausgestaltung der Außendüse wird ein Außenschlauch extrudiert, dessen Durchmesser kleiner als die Länge der großen Achse, aber größer als die Länge der kleinen Achse des zu erzeugenden ovalen Verbund-Rohres ist. Die Außendüse ist in ausreichendem Abstand vor der bereits geschlossenen Formstrecke angeordnet, so dass der Außenschlauch auf dem Weg in die sich in Produktionsrichtung bewegende Formstrecke einerseits seitlich eingeschnürt und andererseits oben und unten aufgeweitet werden kann. Gleichzeitig wird die Gefahr ausgeschlossen, dass die Außendüse in Kollision mit Halbkokillen kommt, die sich der Formstrecke nähern und in diese eingeschwenkt werden. Der Innenschlauch dagegen wird bereits in einer Form extrudiert, die angenähert der endgültigen Form und Größe des zu erzeugenden Rohres entspricht.

Durch die vorteilhafte Weiterbildung nach Anspruch 2 wird sichergestellt, dass der Außenschlauch nach der geschilderten Verformung auf dem Weg von der Außendüse zur Formstrecke über seinen Umfang eine zumindest angenähert identische Wanddicke erhält, was dann auch für die Außenwand des zu erzeugenden Rohres gilt.

Weitere Vorteile, Merkmale und Einzelheiten der Erfindung ergeben sich aus der nachfolgenden Beschreibung eines Ausführungsbeispiels anhand der Zeichnung. Es zeigt
- Fig. 1: einen horizontalen Längsschnitt durch einen Teil einer erfindungsgemäßen Vorrichtung, und zwar durch einen Spritzkopf und den sich anschließenden Teil einer Formstrecke,
- Fig. 2: einen Querschnitt durch den Spritzkopf gemäß der Schnittlinie II-II in Fig. 1,
- Fig. 3: einen gegenüber Fig. 2 stromabwärts angelegten Querschnitt durch den Spritzkopf entsprechend der Schnittlinie III-III in Fig. 1,
- Fig. 4: einen Querschnitt durch den Spritzkopf im Bereich der Außendüse entsprechend der Schnittlinie IV-IV in Fig. 1,
- Fig. 5: einen Querschnitt durch die Formstrecke stromaufwärts der Innendüse entsprechend der Schnittlinie V-V in Fig. 1,
- Fig. 6: einen Querschnitt durch die Formstrecke im Bereich der Innendüse entsprechend der Schnittlinie VI-VI in Fig. 1,
- Fig. 7: einen Querschnitt durch die Formstrecke stromabwärts der Innendüse entsprechend der Schnittlinie VII-VII in Fig. 1,

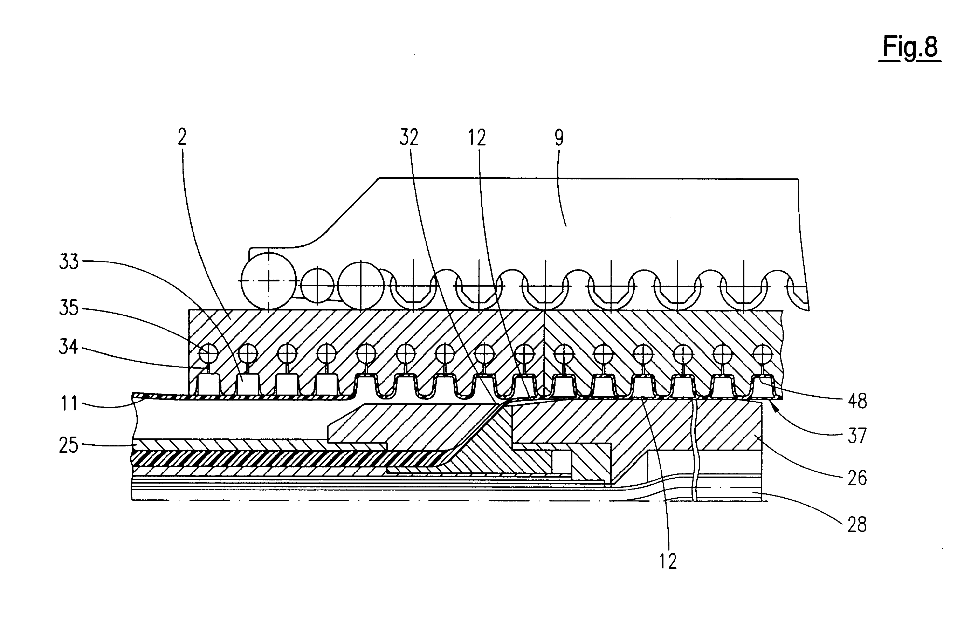

- Fig. 8: einen Teilausschnitt aus Fig. 1 im Bereich der Innendüse in gegenüber Fig. 1 stark vergrößertem Maßstab,
- Fig. 9: ein auf der erfindungsgemäßen Vorrichtung hergestelltes Verbund-Rohr im Querschnitt entsprechend der Schnittlinie IX-IX in Fig. 10 und
- Fig. 10: eine Längsansicht des Verbund-Rohres nach Fig. 9 in teilweise aufgebrochener Darstellung.

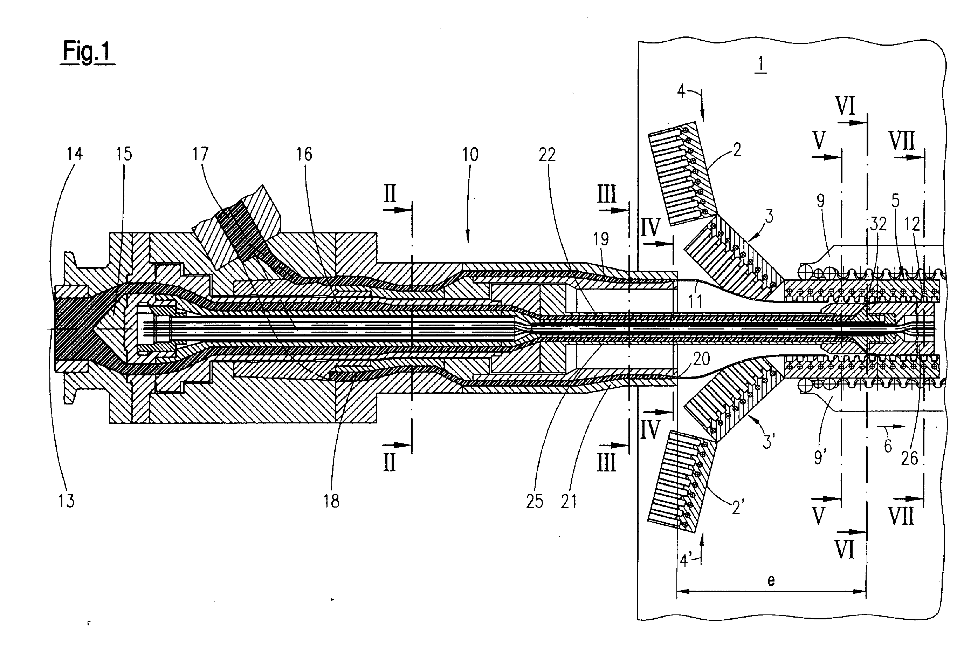

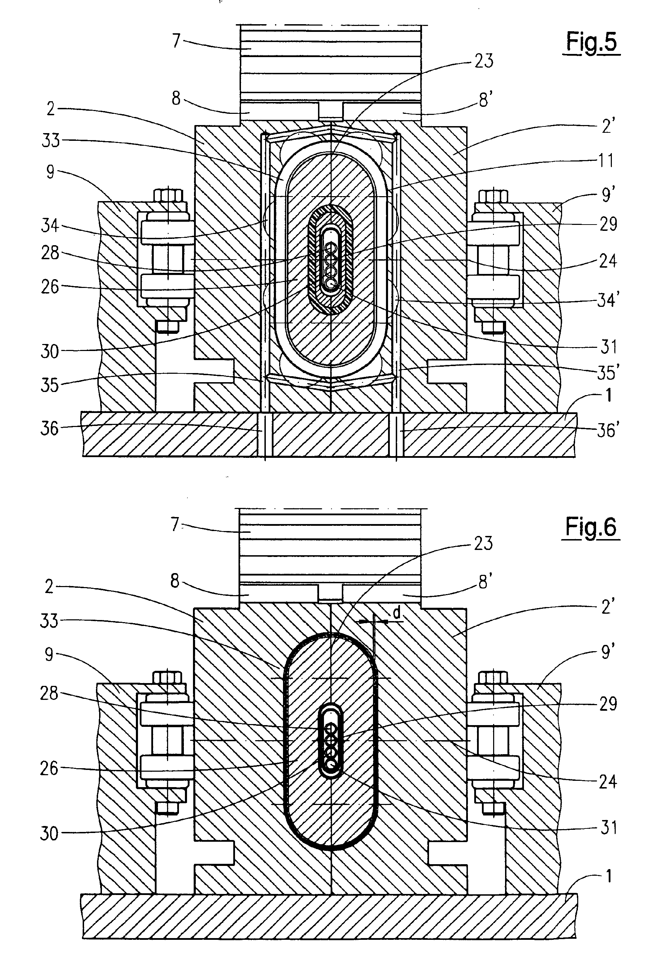

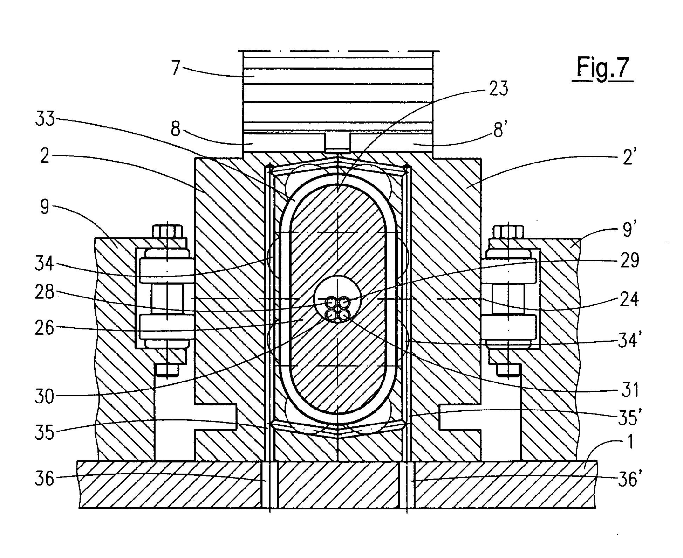

Die in Fig. 1 nur teilweise dargestellte Vorrichtung zur Herstellung von Verbund-Rohren aus thermoplastischem Kunststoff hat einen Grundaufbau, wie er beispielsweise aus der EP 0 509 216 A2 (entsprechend US-Patent 5,346,384) und der EP 0 563 575 A2 (entsprechend US-PS 5,320,797) bekannt ist. Sie weist einen Maschinentisch 1 auf, auf dem Halbkokillen 2, 2' angeordnet sind, die jeweils zu zwei sogenannten Ketten 3, 3' schwenkbar miteinander verbunden sind. Die so gebildeten endlosen, also in sich geschlossenen Ketten 3, 3' werden über nicht dargestellte Umlenkräder und Einlaufrollen geführt. Entsprechend den Umlaufrichtungspfeilen 4, 4' werden sie beim Umlauf in eine Formstrecke 5 eingeschwenkt, in der jeweils zwei Halbkokillen 2, 2' zu einem Kokillenpaar vereinigt werden. In einer Produktionsrichtung 6 hintereinanderfolgende Kokillenpaare liegen dicht an dicht. Der Antrieb der Kokillenpaare auf der Formstrecke 5 in Produktionsrichtung 6 erfolgt mittels eines Antriebsritzels 7, das von oben in an der Oberseite der Halbkokillen 2, 2' ausgebildete Verzahnungen 8, 8' eingreift. Auf der Formstrecke 5 werden die Halbkokillen 2, 2' mittels seitlicher Führungsleisten 9, 9' fest gegeneinander gedrückt, wie Fig. 5 bis 7 entnehmbar ist.

Der Formstrecke 5 ist ein auch als Rohrkopf bezeichneter Spritzkopf 10 vorgeordnet, der dazu dient, zwei ineinander befindliche, also koextrudierte, warmplastische Kunststoffschläuche, nämlich einen Außenschlauch 11 und einen Innenschlauch 12 zu extrudieren. Der Spritzkopf 10 weist einen konzentrisch zu seiner Mittel-Längs-Achse 13 in ihn einmündenden ersten Zuführ-Kanal 14 auf, der an einen ersten Extruder angeschlossen ist. Dieser Zuführ-Kanal 14 wird an einem Führungskegel 15 aufgeweitet und führt danach zu einem ebenfalls konzentrisch zur Achse 13 angeordneten kreisringförmigen ersten Innenkanal-Abschnitt 16.

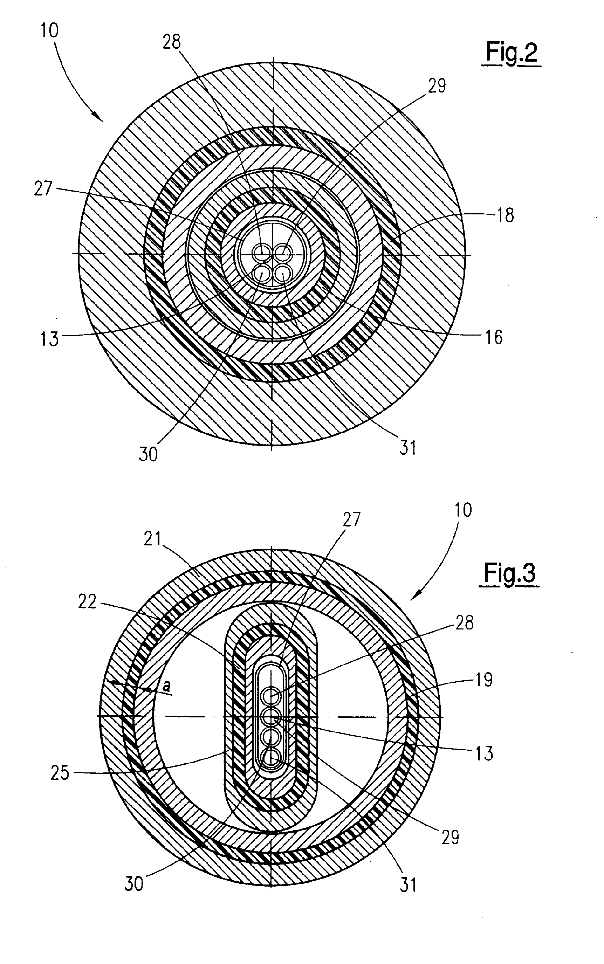

Im - bezogen auf die Längsrichtung der Achse 13 - mittleren Bereich des ersten Innenkanal-Abschnitts 16 mündet seitlich in den Spritzkopf 10 ein zweiter Zufuhr-Kanal 17 ein, der an einen zweiten Extruder angeschlossen ist. Dieser zweite Zuführ-Kanal 17 mündet in einen ersten Außenkanal-Abschnitt 18, der ebenfalls kreisringförmig ausgebildet ist und der den ersten Innenkanal-Abschnitt 16 konzentrisch zur Achse 13 umgibt, wie Fig. 2 erkennen lässt.

An den ersten Außenkanal-Abschnitt 18 schließt sich ein Außendüsen-Kanal 19 an, der in einer Außendüse 20 endet. Der Außendüsen-Kanal 19 ist in einem Außendüsen-Rohr 21 ausgebildet, das mit der Außendüse 20 in deutlichem Abstand vor der Formstrecke 5 endet, wie Fig. 1 zeigt.

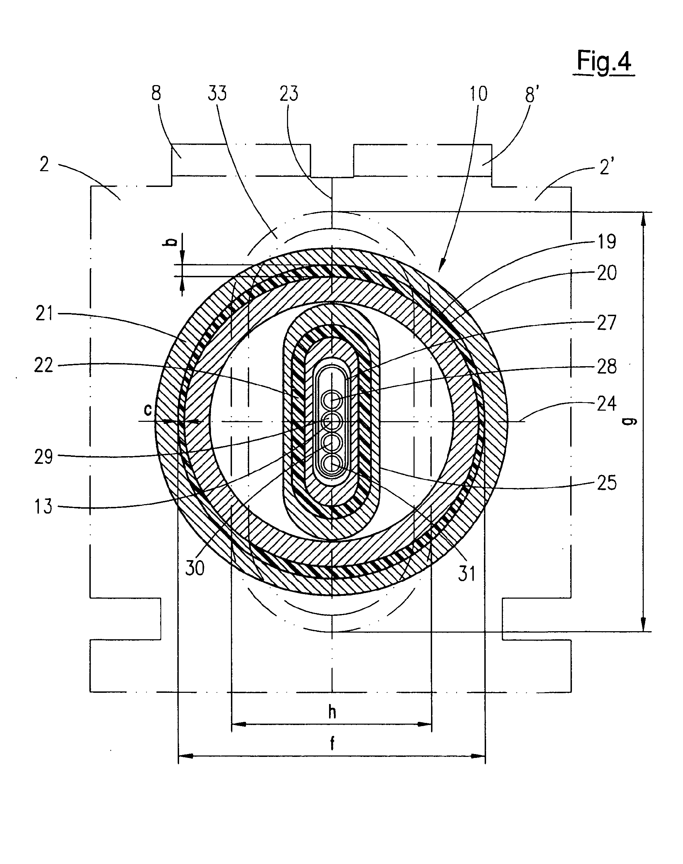

Am Übergang vom zumindest weitgehend massiven Spritzkopf 10 in das Außendüsen-Rohr 21 geht der erste Innenkanal-Abschnitt 16 in einen zweiten Innenkanal-Abschnitt 22 über, der ovalen Querschnitt aufweist. Unter ovalem Querschnitt wird hierbei jede Querschnittsform verstanden, die nicht kreisförmig ist, eine große Achse 23 und eine senkrecht hierauf stehende kleine Achse 24 aufweist, symmetrisch zur großen Achse 23 und zur kleinen Achse 24 ausgebildet ist und keine konkaven Wand-Abschnitte aufweist. Die große Achse 23 ist hierbei vertikal angeordnet, wie Fig. 3 bis 7 zu entnehmen ist. Der zweite Innenkanal-Abschnitt 22 ist in einem ebenfalls oval ausgebildeten Innendüsen-Rohr 25 ausgebildet. Wie aus Fig. 3 und 4 ersichtlich ist, stützt das Innendüsen-Rohr 25 im Bereich der großen Achse 23, also in der Vertikalen, das Außendüsen-Rohr 21. Am Innendüsen-Rohr 25 ist innerhalb der Formstrecke 5 ein Kühl- und Kalibrier-Dorn 26 angebracht. Innerhalb des Innendüsen-Rohres 25 ist ein Schutzrohr 27 angeordnet, durch das Versorgungs-Schläuche 28, 29 für Kühlwasser und 30, 31 für Luft mit unterschiedlichen Drücken geführt sind, die zum Kühl- und Kalibrier-Dorn 26 geführt werden. Im Innendüsen-Rohr 25 weist auch das Schutzrohr 27 ovalen Querschnitt auf, wie Fig. 3 bis 6 entnehmbar ist.

Wie Fig. 4 erkennen lässt, weist der Außendüsen-Kanal 19 im Bereich der Außendüse 20 nicht überall gleiche Weite a auf, wie im Bereich des ersten Außenkanal-Abschnitts 18 (siehe Fig. 2). Er weist zwar einen Kreisquerschnitt auf; die Weite b im oberen und unteren Bereich, also im oberen und unteren Bereich der großen Achse 23, ist größer als die Weite c im seitlichen Bereich, also im Bereich der kleinen Achse 24, wie aus Fig. 4 deutlich hervorgeht. Der Außenschlauch 11 weist also im Augenblick des Austritts aus der Außendüse 20 eine mit der Weite b und c identische Wanddicke auf, die über den Umfang nicht konstant ist, sondern oben und unten deutlich größer ist als in den seitlichen Bereichen, wobei der Übergang kontinuierlich ist. Demgegenüber weisen der zweite Innenkanal-Abschnitt 22 und die am Ende des Innendüsen-Rohres 25 ausgebildete Innendüse 32 über den gesamten Umfang eine konstante Weite d auf, so dass auch die Wanddicke d des aus der Innendüse 32 austretenden Innenschlauchs 12 im Wesentlichen konstant ist.

Aus der Außendüse 20 wird also ein Außenschlauch 11 extrudiert, der Kreisringform hat, allerdings mit deutlich unterschiedlichen Wanddicken b und c. Dieser Außenschlauch 11 wird in deutlichem Abstand e der Außendüse 20 von der Formstrecke 5 extrudiert, wo noch keine Kollision mit den sich seitlich nähernden Halbkokillen 2, 2' eintreten kann.

In den Halbkokillen 2, 2' sind ovale ringförmige Formausnehmungen 33 ausgebildet, in die Teil-Vakuum-Schlitze 34, 34' einmünden, die an Teil-Vakuum-Kanälen 35, 35' in den Halbkokillen 2, 2' ausgebildet sind. Diese Formausnehmungen 33 haben eine ovale Form, die der Außenform eines zu erzeugenden Rohres entspricht. Die Teil-Vakuum-Kanäle 35, 35' kommen auf der Formstrecke mit Teil-Vakuum-Anschlüssen 36, 36' in Überdeckung, die am Maschinentisch 1 ausgebildet sind und, wie es im Einzelnen aus der EP 0 065 729 B1 (entsprechend US-PS 4,492,551) bekannt ist. Aufgrund des an den Formausnehmungen herrschenden Teil-Vakuums, also Unterdrucks gegenüber Atmosphärendruck, wird der Außenschlauch 11 beim Eintritt in die Formstrecke 5 in die Formausnehmungen 33 hineingesaugt und legt sich damit an die Innenwand der Kokillenpaare an. Wie Fig. 4 entnehmbar ist, weist der Außenschlauch 11 beim Austritt aus der Außendüse 20 einen Außendurchmesser f auf, der deutlich kleiner ist als der größte Durchmesser g der Formausnehmungen 33 in Richtung der großen Achse 23 und der deutlich größer ist als der kleinste Durchmesser h der Formausnehmungen 33 in Richtung der kleinen Achse 24. Aufgrund dieser geschilderten geometrischen Verhältnisse befindet sich die Außendüse 20 auch in einem relativ großen Abstand e vor der geschlossenen Formstrecke 5. Der Außenschlauch 11 wird also beim Eintritt in die in Produktionsrichtung 6 vorlaufende Formstrecke 5 seitlich in Richtung der kleinen Achse 24 zur Mittel-Längs-Achse hin unter Vergrößerung der Wanddicke zusammengedrückt und in der Vertikalen in Richtung der großen Achse 23 unter Verringerung der Wanddicke aufgeweitet, wie den Fig. 4 bis 7 in Verbindung mit Fig. 1 entnehmbar ist. Wie Fig. 1 entnehmbar ist, geht dieser Einschnürvorgang kontinuierlich vor sich, und zwar auf dem Weg von der Außendüse 20 zur geschlossenen Formstrecke 5. Entsprechendes gilt für das Aufweiten des Außenschlauches 11 in der Vertikalen, also in Richtung der großen Achse 23, wobei darauf hinzuweisen ist, dass das Aufweiten des Außenschlauches 11 in der Vertikalen erst beginnt, wenn die in den Halbkokillen 2, 2' ausgebildeten Teil-Vakuum-Kanäle 35, 35' in Überdeckung mit den Teil-Vakuum-Anschlüssen 36, 36' kommen. Das Aufweiten beginnt also etwas später als das Einschnüren des Außenschlauches 11.

Die Innendüse 32 befindet sich zwar im Anfangsbereich der Formstrecke 5, aber bereits in deren geschlossenem Bereich, wo der Außenschlauch 11 bereits seine der Ausgestaltung der Formausnehmungen 33 entsprechende ovale gewellte Form angenommen hat. Wie Fig. 6 entnehmbar ist, tritt der Innenschlauch 12 bereits mit dem Querschnitt aus der Innendüse 32 aus, mit dem er an die Innenseite des Außenschlauches angelegt und mit letzterem verschweißt wird. Der ebenfalls ovale Kühl- und Kalibrier-Dorn 26 stützt den Innenschlauch 12. Diese Technik ist allgemein bekannt, und beispielsweise im Einzelnen in der EP 0 509 216 A2 (entsprechend US 5,346,384) dargestellt und beschrieben.

Das in der geschilderten Weise hergestellte Verbundrohr 37 weist einen ovalen Querschnitt auf. Im konkreten Fall wird dieser ovale Querschnitt durch zwei zueinander parallele Wand-Abschnitte 38, 39 und zwei diese miteinander zu einem geschlossenen Querschnitt verbindende halbzylindrische Wand-Abschnitte 40, 41 begrenzt bzw. gebildet. Das Rohr 37 weist die große Achse 23 mit einer Länge g und eine kleine Achse 24 mit einer Länge h auf, wobei - wie bereits erwähnt - die Längen g und h jeweils auf den Außenquerschnitt des Rohres 37 bezogen sind. Für das Verhältnis der Länge g der großen Achse 23 und der Länge h der kleinen Achse 24 gilt: 1,5 ≤ g/h ≤ 5,0. Aus diesen Maßverhältnissen ergibt sich auch, in welchem erheblichen Maß der Außenschlauch 11 nach dem Austritt aus der Außendüse 20 einerseits eingeschnürt und andererseits aufgeweitet werden muss.

Das Rohr 37 weist weiterhin in gleicher Weise einen Innen-Querschnitt auf, der durch eine durchgehend glatte Innenwand 42 begrenzt wird. Auch diese Innenwand 42 wird durch zwei zueinander parallele ebene Innenwand-Abschnitte 43, 44 und zwei diese verbindende halbzylindrische Innenwand-Abschnitte 45, 46 gebildet. Die durchgehend glatte Innenwand 42 begrenzt einen Strömungs-Kanal 47 für den Transport von Gas, insbesondere Luft, in Klima- bzw. in Lüftungs-Anlagen.

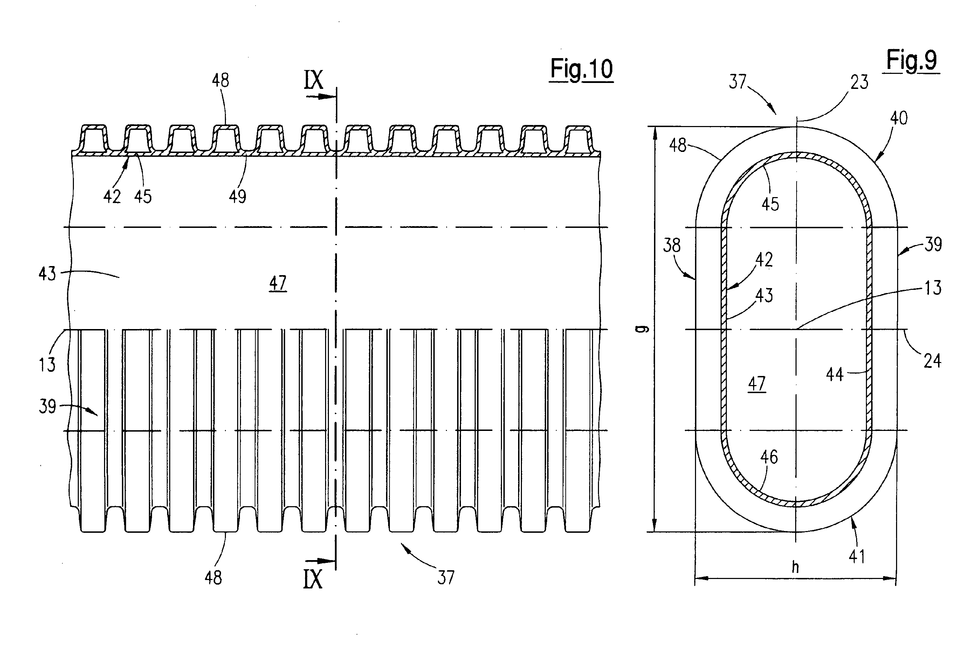

Wie sich aus Fig. 9 und 10 ergibt, wird die Außenwand des Rohres 37 entsprechend der geschilderten Form der Formausnehmungen 33 durch Wellungen 48 gebildet. Diese weisen etwa Trapez-Querschnitt auf. Benachbarte Wellungen 48 verbindende Fuß-Abschnitte 49 begrenzen Wellentäler. Im Bereich der Fuß-Abschnitte 49 erfolgt die Verschweißung von Außenschlauch 11 und Innenschlauch 12.

## Patentansprüche

1. Vorrichtung zur Herstellung von Verbundrohren,
- wobei mit umlaufenden Formausnehmungen (33) versehene, sich auf einer Formstrecke (5) jeweils paarweise zu einer Form ergänzende Halbkokillen (2, 2') im Kreislauf und in einer Produktionsrichtung (6) geführt angeordnet sind,
- wobei die Formausnehmungen (33) an in den Halbkokillen (2, 2') ausgebildete Teil-Vakuum-Kanäle (35, 35') angeschlossen sind,
- wobei der Formstrecke (5) ein Spritzkopf (10) mindestens eines Extruders vorgeordnet ist und
- wobei der Spritzkopf (10) mit einer Außen-Düse (20) zur Extrusion eines Außenschlauches (11) und in Produktionsrichtung (6) nachgeordnet mit einer in der Formstrecke (5) befindlichen InnenDüse (32) zur Extrusion eines Innenschlauches (12) und an seinem in Produktionsrichtung (6) stromabwärts liegenden Ende mit einem Kühl- und Kalibrier-Dorn (26) versehen ist,
**dadurch gekennzeichnet,**
**dass** die Formausnehmungen (33) ovalen Querschnitt mit einer vertikal verlaufenden großen Achse (23) mit einer Länge g und mit einer horizontal verlaufenden kleinen Achse (24) mit einer Länge h aufweisen, dass die Innendüse (32) einen dem ovalen Querschnitt der Formausnehmungen (33) ähnlichen ovalen Querschnitt aufweist,
**dass** die Außendüse (20) etwa Kreisquerschnitt mit einem Durchmesser f aufweist, für den gilt: h < f < g und
**dass** sich die Außendüse (20) in einem Abstand e vor der Formstrecke (5) und außerhalb eines Kollisionsbereiches mit Halbkokillen (2, 2') befindet.

2. Vorrichtung nach Anspruch 1, **dadurch gekennzeichnet,**
**dass** die Außendüse (20) eine sich über ihren Umfang stetig verändernde Weite aufweist, wobei für die Weite b im oberen und unteren Bereich im Vergleich zur Weite c in den seitlichen Bereichen gilt: c < b.

3. Vorrichtung nach Anspruch 1 oder 2, **dadurch gekennzeichnet,**
**dass** die Halbkokillen (2, 2') auf einem Maschinentisch (1) angeordnet sind.

4. Vorrichtung nach Anspruch 3, **dadurch gekennzeichnet,**
**dass** auf der Formstrecke (5) im Maschinentisch (1) Teil-Vakuum-Anschlüsse (36, 36') angeordnet sind, die mit den Teil-VakuumKanälen (35, 35') in Überdeckung bringbar sind.

5. Vorrichtung nach einem der Ansprüche 1 bis 4, **dadurch gekennzeichnet,**
**dass** für den Abstand e der Außendüse (20) von der Formstrecke (5) gilt: e ≥ 300 mm.
